Europäisches Patentamt

European Patent Office

Office européen des brevets

(11) Publication number: **0 096 940**
**B1**

(12) # EUROPEAN PATENT SPECIFICATION

(45) Date of publication of patent specification: **19.02.86**

(51) Int. Cl.⁴: **H 05 G 1/64,** H 04 N 5/32

(21) Application number: **83200862.7**

(22) Date of filing: **14.06.83**

(54) **X-ray examination apparatus.**

(30) Priority: **15.06.82 NL 8202418**

(43) Date of publication of application:
**28.12.83 Bulletin 83/52**

(45) Publication of the grant of the patent:
**19.02.86 Bulletin 86/08**

(84) Designated Contracting States:
**DE FR GB NL SE**

(56) References cited:
**CH-A- 430 899**
**GB-A-2 020 945**
**US-A-3 831 058**
**US-A-4 137 454**
**US-A-4 185 198**
**US-A-4 193 089**

(73) Proprietor: **N.V. Philips' Gloeilampenfabrieken**
**Groenewoudseweg 1**
**NL-5621 BA Eindhoven (NL)**

(72) Inventor: **Verhoeven, Leonardus Adrianus**
**Johannes**
**c/o INT. OCTROOIBUREAU B.V. Prof. Holstlaan 6**
**NL-5656 AA Eindhoven (NL)**

(74) Representative: **Scheele, Edial François et al**
**INTERNATIONAAL OCTROOIBUREAU B.V. Prof.**
**Holstlaan 6**
**NL-5656 AA Eindhoven (NL)**

Courier Press, Leamington Spa, England.

## Description

The invention relates to an X-ray examination apparatus provided with an X-ray image intensifier tube and a television camera tube for image recording, and with an electronic circuit for processing image information thus recorded.

Such an apparatus adapted for image subtraction has been described in US 4,204,225. In such apparatus there is often a need to be able to provided a diagnostic image in which small contrast differences can be displayed so as to be well recognizable. For this purpose, it is necessary to be able to amplify the video signals corresponding to these small contrast differences to a sufficient extent. In conventional television camera tubes with a maximum signal current of, for example, 200 nA for brightness peaks in the image and a camera amplifier to be used therein having an equivalent noise current of, for example, 1 to 2 nA, with a band width of, for example, 5 MHz, the signal-to-noise ratio then utilized will be from 100 to 200. For producing normal visually observable images, such a signal-to-noise ratio is admissible. However, when sufficient amplification is provided for the smaller contrast differences important for diagnostic purposes, an inadmissible amount of image disturbance overload will occur.

The invention has for its object to provide the possibility of displaying low-noise diagnostic images with a good observability of small contrast differences without normal image production being disturbed thereby. According to the invention, an apparatus of the kind mentioned in the preamble is characterized in that means are arranged to increase the beam current of the camera tube is temporarily for the duration of a selected X-ray exposure.

The resultant temporary increase in the signal current will immediately yield a proportionally better signal-to-noise ratio in the recorded television images, as a result of which a correspondingly smaller contrast difference can be displayed with sufficent observability, though possibly with a slight loss of resolving power.

A television camera tube, such as the "Plumbicon", is generally adjusted so as to be able to supply a tube current up to approximately 600 nA. The availability of this high tube current with respect to a maximum signal current of approximately 200 nA to be used for normal television image production has for its object to be able to read also brightness peaks in a scene projected onto the target of the tube without detrimental effects on the image quality. For good image production with comparatively small contrast differences, as is required for the production of difference images, more stringent requirements are imposed on the signal-to-noise ratio. The method in which a higher maximum signal current is utilized is particularly suitable for this purpose. For producing fluoroscopic images in an X-ray BV-TV (image intensifier—television) circuit or a corresponding apparatus for electronic radiography, it is desirable to be able to readjust to the usual lower maximum signal current without further operations being required.

In a preferred embodiment, the apparatus comprises a camera tube in which the tube current can be further increased, for example up to approximately 1500 nA. As a result, even smaller contrast differences can be displayed, though possibly at the same expense of an increase in the MTF. If it is not required that the MTF of the image should always be an optimum, the value of the beam current can now be chosen so that for each individual case an optimum compromise is reached between the MTF and the minimum contrast differences to be displayed.

Due to the fact that in an apparatus according to the invention the signal current reaches an increased value only for a very short time, the integrated cathode loading and the integrated target loading will not be materially higher for camera tubes subjected to an increased beam current and the life of the camera tube will not be shortened appreciably. A favourable camera tube for use in an apparatus according to the invention is a tube provided with a crossover-less gun as described in US 3,831,058.

In an apparatus according to the invention, it suffices to use a single television camera system, which by automatic or non-automatic changeover can be used both for displaying normal visual images and for displaying images with an increaed signal-to-noise ratio to the benefit of the display of small contrast differences. An embodiment according to the invention comprises means to measure a maximum locally occurring exposure intensity and to adapt thereto an admissible degree of exposure. In this case, use may be made of a method in which peak values in the video signal are utilized, but it is also possible to use mean brightness values, for example, selected from the video signal or by means of a photometer directly from the image to be recorded.

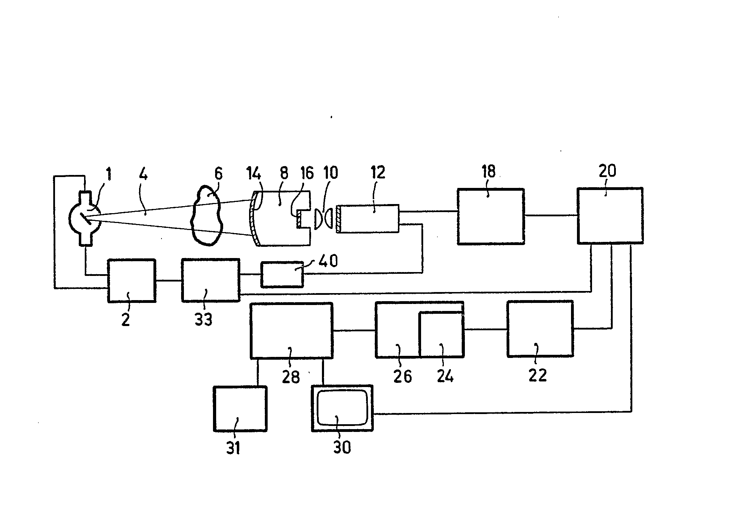

An apparatus of the kind shown in Figure 1 comprises an X-ray tube 1 with a supply 2 for producing an X-ray beam 4 for irradiating an object 6. With respect to the object to be irradiated there is arranged opposite the X-ray source an X-ray image intensifier tube 8 which is coupled by means of a lens system 10 to a television camera tube 12. The X-ray image intensifier tube comprises an input screen 14, which is formed in the usual manner with a luminescent screen and a photocathode, and an output screen 16 provided on an output window and also having a luminescent layer in which electrons to be emitted by the photocathode form a fluoroscopic image. This image is recorded by the camera tube and converted into a video signal. The video signal is supplied to a video preamplifier 18 and the video signal amplified therein is supplied to a video signal processing device 20. The video signal processing device has connected to it an analogue-to-digital converter 22 from which digitized video signals are supplied to a digital signal processing device 26 provided with a memory 24 having preferably at least two image stores for image subtraction. Digital video signals produced or composed in this device are supplied to a digital-to-analogue converter 28, which has connected to it, for image display, a monitor 30 and for video signal recording, a recording element 31 such as a video disc recorder or a device using a digital disc.

The supply for the X-ray tube is controlled from a central control unit 33.

According to the invention, the exposure of the camera tube is now controlled from the central control unit 33 so that during a recording of a selected X-ray exposure, *i.e.* during a short strong X-ray pulse, the maximum signal current in the camera tube can become substantially equal to the maximum beam current to be supplied therein. For example, by modifying potentials applied to the electrodes of the electron gun of the camera tube, an adjustment of the camera tube can be realized for which the maximum beam current temporarily has a higher value. It is advantageous to use a camera tube provided with a crossover-less gun in this arrangement.

For adjusting the magnitude of this modified exposure, a signal selection system 40 can be provided. By means of this system, the locally occurring light intensity in an image, for example, can be measured and, starting from this value, the exposure range for the image to be recorded can be adjusted. In another embodiment, by means of this system, video signals can be selected which are relevant for the purposes of exposure control.

## Claims

1. An X-ray examination apparatus provided with an X-ray image intensifier tube and a television camera tube for image recording and with an electronic circuit for processing image information thus recorded, characterized in that means are arranged, to increase the beam current of the camera tube temporarily for the duration of a selected X-ray exposure.

2. An apparatus as claimed in Claim 1, characterized in that a signal selection system is provided for selecting signals relevant to local image brightness for controlling the selected X-ray exposure.

3. An apparatus as claimed in Claim 1 or 2, characterized in that the television camera tube is adapted to admit a maximum beam current of at least 1000 nA.

4. An apparatus as claimed in any one of the preceding Claims, characterized in that the television camera tube is provided with a crossover-less electron gun.

5. An apparatus as claimed in any one of the preceding Claims, characterized in that the apparatus is arranged to provide alternatively a television camera for the fluoroscopic images with a normal signal-to-noise ratio, and selected images with an increased signal-to-noise ratio.

## Patentansprüche

1. Röntgenuntersuchungsgerät mit einer Röntgenbildverstärkerröhre und einer Fernsehkameraröhre für Bildaufzeichnung und mit einer elektronischen Schaltung zur Bearbeitung auf diese Weise aufgezeichneter Bildaufnahmen, dadurch gekennzeichnet, dass Mittel zum vorübergehenden Erhöhen des Strahlstroms der Kameraröhre für die Dauer einer ausgewählten Röntgenaufnahme angeordnet sind.

2. Röntgenuntersuchungsgerät nach Anspruch 1, dadurch gekennzeichnet, dass ein Signalwählsystem zum Auswählen von für stellenweise Bildhelligkeit zur Steuerung der ausgewählten Röntgenaufnahme einschlägigen Signalen.

3. Röntgenuntersuchungsgerät nach Anspruch 1 oder 2, dadurch gekennzeichnet, dass die Fernsehkameraröhre zum Durchlassen eines Höchststrahlstroms von zumindest 1000 nA ausgelegt ist.

4. Röntgenuntersuchungsgerät nach einem oder mehreren der vorangehenden Ansprüche, dadurch gekennzeichnet, dass die Fernsehkameraröhre mit einem Elektronenstrahlerzeugungssystem ohne Bundelknoten ausgerüstet ist.

5. Röntgenuntersuchungsgerät nach einem oder mehreren der vorangehenden Ansprüche, dadurch gekennzeichnet, dass das Gerät mit einer Fernsehkamera sowohl für Durchleuchtungsbilder mit einem normalen Signal-Rauschabstand als auch für ausgewählte Bilder mit einem vergrösserten Signal-Rauschabstand vorgesehen ist.

## Revendications

1. Appareil d'examen à rayons X pourvu d'un tube intensificateur d'image de rayons X et d'un tube de prise de vues de télévision pour l'enregistrement de l'image, ainsi que d'un circuit électronique pour le traitement de l'information d'image ainsi enregistrée, caractérisé en ce que des moyens sont prévus pour augmenter le courant de faisceau du tube de prise de vues temporairement pendant la durée d'une exposition choisie aux rayons X.

2. Appareil suivant la revendication 1, caractérisé en ce qu'un système de sélection de signaux est prévu pour sélectionner des signaux se rapportant à la luminosité locale de l'image afin de régler l'exposition choisie aux rayons X.

3. Appareil suivant la revendication 1 ou 2, caractérisé en ce que le tube de prise de vues de télévision est à même d'admettre un courant de faisceau maximum d'au moins 1000 nA.

4. Appareil suivant l'une quelconque des revendications précédentes, caractérisé en ce que le tube de prise de vues de télévision est pourvu d'un canon électronique sans convergence.

5. Appareil suivant l'une quelconque des revendications précédentes, caractérisé en ce qu'il est conçu pour fournir en alternance un moyen de prise de vues de télévision pour les images fluoroscopiques avec un rapport signal-bruit normal et des images choisies avec un rapport signal-bruit accru.

0 096 940

1 4 6 14 8 16 10 12 18 20

40

2 33

28 26 24 22

31 30